# EUROPÄISCHE PATENTSCHRIFT

(11) **EP 1 419 960 B1**
(45) Veröffentlichungstag und Bekanntmachung des Hinweises auf die Patenterteilung: **19.12.2007**
(21) Anmeldenummer: 03024685.4
(22) Anmeldetag: 28.10.2003
(51) Int. Cl.: B62K 9/00, B62K 5/08

(54) **Kindertretfahrzeug**
Childs ride-on vehicle
Véhicule d'enfant

(30) Priorität: 16.11.2002 DE 10253524
(43) Veröffentlichungstag der Anmeldung: 19.05.2004
(73) Patentinhaber: Firma Franz Schneider GmbH & Co. KG, D-96465 Neustadt b. Coburg (DE)
(72) Erfinder: Schneider, Frank, 96465 Neustadt b. Coburg (DE)
(74) Vertreter: Flosdorff, Jürgen

(56) Entgegenhaltungen:
- WO-A-99/38721
- GB-A- 153 537
- GB-A- 1 223 583

## Beschreibung

Die Erfindung betrifft ein Kindertretfahrzeug, mit einem Lenkrad, das an einer Lenkstange befestigt ist, die durch den Fahrzeugkörper geführt ist, wie es aus GB 1223583 bekannt ist.

Bei Kindertretfahrzeugen muß aus Sicherheitsgründen gewährleistet sein, daß der Lenkeinschlag begrenzt ist, damit das Fahrzeug beim Kurvenfahren nicht seitlich umkippen kann. Außerdem besteht ein großes Bedürfnis danach, daß Kindertretfahrzeuge mit einem geringen Aufwand zu montieren sind.

Der vorliegenden Erfindung liegt daher die Aufgabe zugrunde, mit einem einfachen Aufbau des Fahrzeugs sowohl eine leichte Montage als auch eine sichere Lenkbegrenzung zu erreichen.

Diese Aufgabe wird erfindungsgemäß durch die Merkmale des Patentanspruchs 1 gelöst. Vorteilhafte Ausgestaltungen der Erfindung sind in den Unteransprüchen gekennzeichnet.

Die Erfindung sieht vor, daß unter dem Fahrzeugkörper des Kindertretfahrzeugs eine kreisförmige oder kreisringförmige Lagerfläche für einen Drehteller ausgebildet ist, der mit einem entsprechenden kreisförmigen oder kreisringförmigen Abschnitt an dieser Lagerfläche gehalten ist. Da der Fahrzeugkörper aus Kunststoff hergestellt ist, ist die Lagerfläche bevorzugt einstückig angeformt.

Der ebenfalls bevorzugt aus Kunststoff bestehende Drehteller hat miteinander fluchtende, seitlich abstehende Lager für die Vorderachse das Fahrzeugs, und außerdem in einem sich senkrecht zu den Lagern erstreckenden plattenförmigen Ansatz an dem kreisförmigen Mittelteil des Drehtellers eine kreisbogenförmige Aussparung, die sich in Längsrichtung der Vorderachse erstreckt, wobei sie von dieser zur rückwärtigen Seite des Fahrzeugkörpers hin beabstandet ist, und eine an der von der Vorderachse abgewandten Seite der kreisbogenförmigen Aussparung ausgebildete weitere Aussparung. Dabei liegen die Mittelpunkte der kreisförmigen oder kreisringförmigen Lagerfläche des Fahrzeugskörpers bzw. des kreisförmigen oder kreisringförmigen Drehtellerabschnitts, der kreisbogenförmigen Aussparung und der weiteren Aussparung auf einer Linie, die senkrecht zu der in ihren Lagern befestigten Vorderachse verläuft.

Die Lenkstange, die aus einem im Querschnitt kreisförmigen Metallstab besteht, hat einen langgestreckten, geradlinigen Schenkel, der an dem in der Einbaulage unteren Ende bogenförmig in einen kurzen Schenkel zurückgeführt wird, so daß der untere Endabschnitt die Form eines U hat.

Nach Befestigung des Drehtellers unter der hierzu vorgesehenen Lagerfläche unter dem Fahrzeugkörper wird die Lenkstange in der Weise montiert, daß sie mit ihrem langen geradlinigen Schenkel von unten durch die kreisbogenförmige Aussparung des Drehtellers und danach so durch den Fahrzeugkörper geführt wird, daß sie an der für das Lenkrad vorgesehenen Stelle oben aus dem Fahrzeugkörper austritt. Dabei wird die Anordnung so getroffen, daß das bogenförmig zurückgeführte Ende der Lenkstange in die weitere Aussparung des Drehtellers eingesetzt wird. In dieser Lage wird die Lenkstange gehalten, wenn das Lenkrad beispielsweise mittels einer Schraubenverbindung am oberen Ende der Lenkstange befestigt ist.

Der Drehteller wird auf einfache Weise dadurch an seiner kreisförmigen Lagerfläche gehalten, daß er bevorzugt zwei an der Lagerfläche befestigte, von dieser jedoch beabstandete Bolzen untergreift, die zuvor durch Schlitze in dem Drehteller hindurchgetreten sind, woraufhin der Drehteller in eine Position verschwenkt wird, in der die Vorderachse mit den Rädern befestigt werden kann. In dieser Position sind die Bolzen und die zugehörigen Schlitze in Umfangsrichtung voneinander beabstandet, so daß der Drehteller sicher gehalten ist.

Wenn das Lenkrad gedreht wird, wird hierdurch der bogenförmig zurückgeführte Endabschnitt der Lenkstange auf einem Kreisbogen um den langen Schenkel der Lenkstange gedreht. Da das bogenförmig zurückgeführte Ende dabei im wesentlichen ohne seitliches Spiel in die weitere Aussparung des Drehtellers eingreift, wird der Drehteller hierdurch um den Mittelpunkt der zugehörigen Lagerfläche an dem Fahrzeugkörper gedreht, wobei auch die kreisbogenförmige Aussparung, die von dem langen Schenkel der Lenkstange durchgriffen wird, diese Kreisbewegung mitmacht. Der Lenkeinschlag wird dadurch begrenzt, daß die kreisbogenförmige Aussparung mit einem seitlichen Endabschnitt an die Lenkstange oder einen diese umgebenden Anschlag anstößt. Hierdurch ist der Lenkeinschlag in beiden Richtungen exakt begrenzt.

Die Ausbildung des erfindungsgemäßen Kindertretfahrzeugs und seine Montage sind dann besonders einfach getroffen, wenn der aus Kunststoff bestehende Drehteller mit den Lagern für die Vorderachse und dem die beiden Aussparungen enthaltenden Teil als ein einteiliges Spritzgußteil ausgebildet ist, das in seiner Einbaulage lediglich von den oben erwähnten Zapfen und von der Lenkstange gehalten wird. Da der Lenkeinschlag exakt auf das gewünschte Maß begrenzt werden kann, ist die Sicherheit des Kindertretfahrzeugs erhöht.

Weitere Einzelheiten der Erfindung ergeben sich aus der nachfolgenden Beschreibung einer bevorzugten Ausführungsform sowie anhand der Zeichnung. Dabei zeigen:
- Figur 1: eine Seitenansicht wesentlicher Bestandteile des Kinderfahrzeugs in einer Explosionsdarstellung;

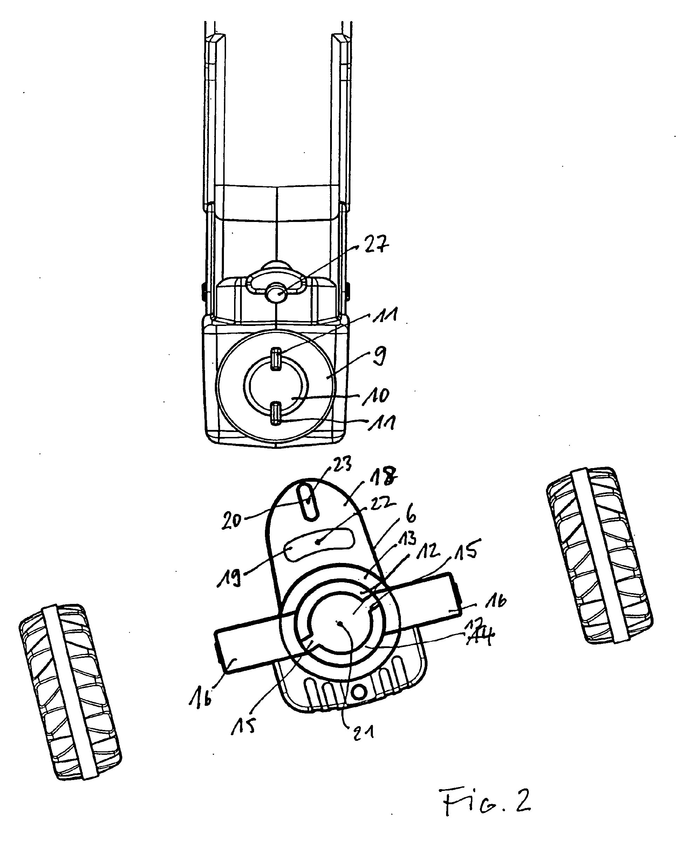

- Figur 2: eine Unteransicht wesentlicher Teile des Fahrzeugs in einer Explosionsdarstellung;
- Figur 3: eine Unteransicht des Vorderbereichs des fertig montierten Kindertretfahrzeugs mit maximalem Lenkeinschlag in einer Richtung und
- Figur 4: eine Darstellung ähnlich Figur 4 mit maximalem Lenkeinschlag in der anderen Richtung.

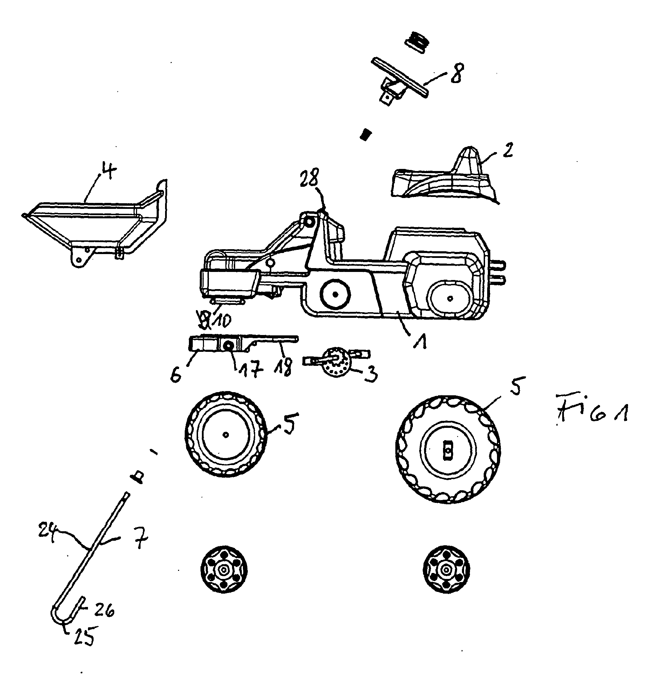

Figur 1 zeigt die wesentlichen Bestandteile einer Ausführungsform des erfindungsgemäßen Kindertretfahrzeugs. Diese sind: Ein Fahrzeugkörper 1 aus Kunststoff, ein Sitz 2, eine Tretkurbel 3, eine Kippmulde 4, Räder 5, ein Drehteller 6, eine Lenkstange 7 und ein Lenkrad 8.

Unter dem Fahrzeugkörper 1 ist eine kreisringförmige Lagerfläche 9 angeformt mit einem nach unten ragenden konzentrischen Vorsprung 10, an dem zwei Zapfen 11 befestigt sind, die über den zentralen kreisförmigen Vorsprung 10 radial nach außen überstehen und von der Lagerfläche 9 beabstandet sind.

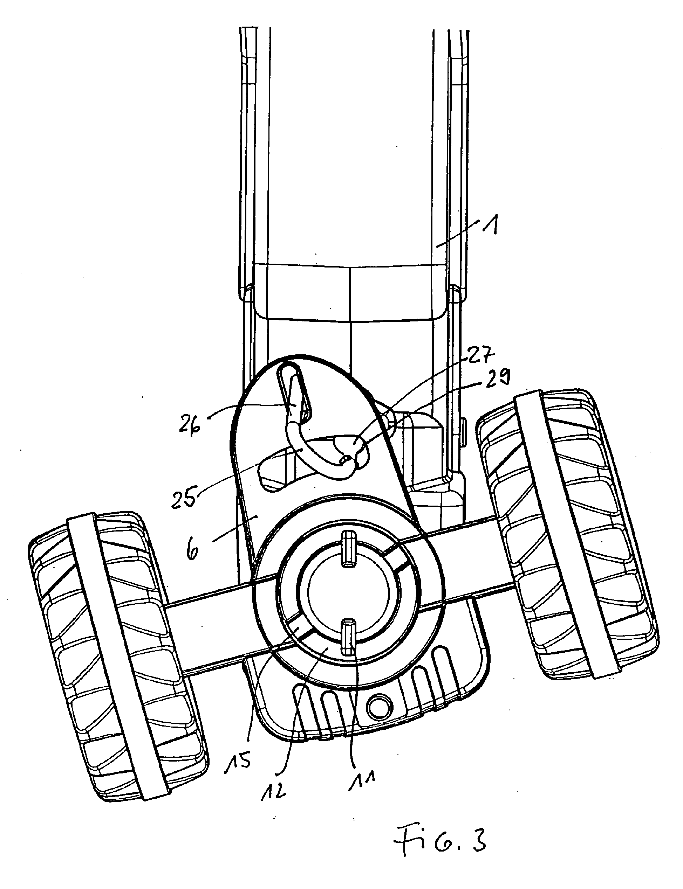

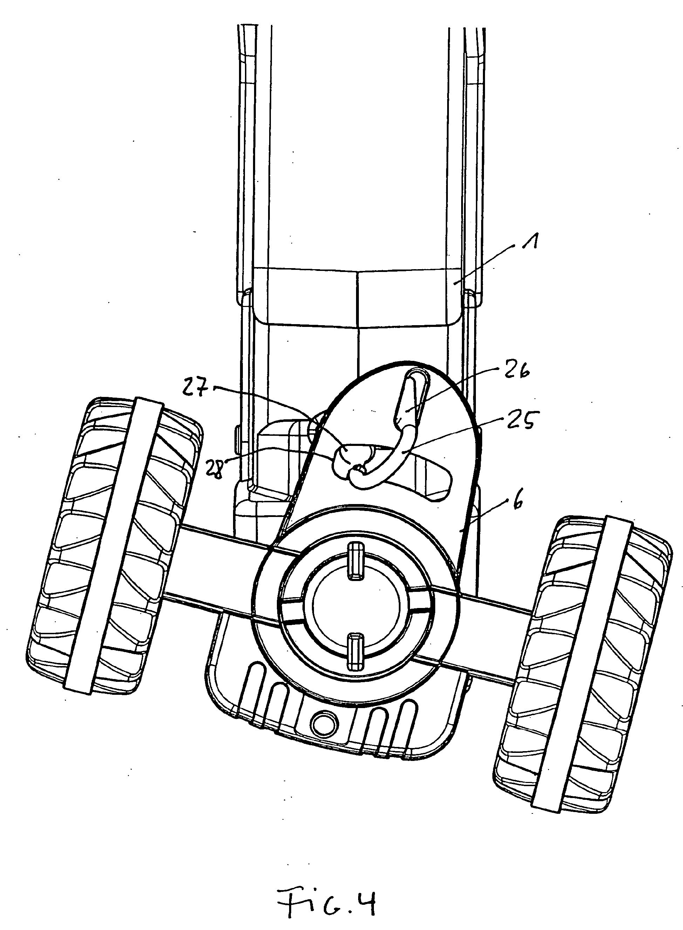

Das als "Drehteller" 6 bezeichnete Kunststoff-Bauteil hat eine kreisringförmige Lagerfläche 12, aus der zwei Schlitze 15 ausgespart sind. Bei der Montage des Drehtellers 6 treten die Zapfen 11 durch die Schlitze 12 hindurch, woraufhin der Drehteller 6 so verdreht wird, daß die Zapfen 11 versetzt zu den Schlitzen 12 angeordnet sind und die ringförmige Lagerfläche 12 übergreifen, wie die Figuren 3 und 4 zeigen. In diesem Zustand liegt der Drehteller an der Lagerfläche 9 des Fahrzeugkörpers 1 an.

Von dem Drehteller 6 stehen seitlich zwei miteinander fluchtende Lager 16 für eine nicht dargestellte Vorderachse des Fahrzeugs ab, wobei die Achse in der Darstellung der Figur 1 aus stirnseitigen Löchern 17 der Lager 16 austreten.

Der Drehteller 6 hat ferner einen im rechten Winkel zu den Lagern 16 sich erstreckenden plattenförmigen Vorsprung 18, der eine kreisbogenförmige Aussparung 19 und an der von den Lagern 16 abgewandten Seite ein von der kreisbogenförmigen Aussparung 19 beabstandetes Langloch 20 aufweist. Die Mittelpunkte 21, 22 und 23 der kreisringförmigen Lagerfläche, der kreisbogenförmigen Aussparung19 und des Langlochs 20 liegen auf einer Linie, die senkrecht zur Vorderachse des Fahrzeugs verläuft.

Die Lenkstange 7 hat einen geradlinigen langen Schenkel 24, der am unteren Ende in einem bogenförmigen Abschnitt 25 zu einer U-Form mit einem kurzen geradlinigen Endabschnitt 26 zurückläuft. Bei der Montage des Tretfahrzeugs wird der lange Schenkel 24 durch die kreisbogenförmige Aussparung 22 sowie eine Bohrung 27 des Fahrzeugkörpers 1 hindurchgeführt, wobei der Endabschnitt 26 der Lenkstange 7 in das Langloch 20 eingesetzt wird. Die Lenkstange 7 tritt mit ihrem oberen Ende aus einer weiteren Bohrung 28 an der Oberseite des Fahrzeugkörpers 1 aus. An dem ausgetretenen Endabschnitt der Lenkstange 7 wird das Lenkrad 8 drehfest befestigt.

Wenn das Lenkrad gedreht wird, schwenkt der Endabschnitt 26 der Lenkstange 7 um den Schenkel 24 der Lenkstange und damit um die Bohrung 27 des Fahrzeugskörpers 1, wodurch sich der Drehteller 6 um den Mittelpunkt 21 der Lagerfläche 9 dreht. Hierbei stößt - je nach Drehrichtung - die seitliche Begrenzung 28 oder 29 der bogenförmigen Aussparung 19 an die Lenkstange 7 oder eine diese umgebende Hülse des Fahrzeugkörpers 1 an, wodurch der Lenkeinschlag, d.h. der Schwenkwinkel der Vorderachse begrenzt wird.

## Patentansprüche

1. Kindertretfahrzeug, mit einem Lenkrad (8), das an einer Lenkstange (7) befestigt ist, die durch den Fahrzeugkörper (1) geführt ist,
**dadurch gekennzeichnet,**
**daß** unter dem Fahrzeugkörper (1) eine Lagerfläche (9) für einen Drehteller (6) ausgebildet ist, der an der Lagerfläche (9) gehalten ist und Lager (16) für die Vorderachse des Tretfahrzeugs enthält,
**daß** der Drehteller (6) ferner eine kreisbogenförmige Aussparung (19), die sich in Längsrichtung der Vorderachse, von dieser beabstandet, erstreckt und von der Lenkstange (7) durchgriffen wird, und eine mittig zu der kreisbogenförmigen Aussparung (19) an der von der Vorderachse abgewandten Seite ausgebildete weitere Aussparung (20) aufweist, in die ein bogenförmig zurückgeführtes Ende (26) der Lenkstange (7) eingreift.

2. Kindertretfahrzeug nach Anspruch 1,
**dadurch gekennzeichnet,**
**daß** die Lenkstange (7) am unteren Ende im wesentlichen U-förmig ausgebildet ist.

3. Kindertretfahrzeug nach Anspruch 1 oder 2,
**dadurch gekennzeichnet,**
**daß** die weitere Aussparung (20) ein Langloch ist, das sich senkrecht zu der Vorderachse erstreckt.

4. Kindertretfahrzeug nach einem der Ansprüche 1 bis 3,
**dadurch gekennzeichnet,**
**daß** der Eingriff des umgebogenen Endes (26) der Lenkstange (7) in das Langloch (20) durch Befestigung des Lenkrades (8) an dem oberen Ende der Lenkstange (7) gesichert ist.

5. Kindertretfahrzeug nach einem der Ansprüche 1 bis 4,
**dadurch gekennzeichnet,**
**daß** der Drehteller (6) von wenigstens zwei an dem Fahrzeugkörper (1) angebrachten Zapfen (11) untergriffen wird, die durch Schlitze (15) in dem Drehteller (6) durchtreten, die im montierten Zustand des Kindertretfahrzeugs in Umfangsrichtung zu den Zapfen (11) versetzt sind.

6. Kindertretfahrzeug nach einem der Ansprüche 1 bis 5,
**dadurch gekennzeichnet,**
**daß** der Drehteller (6) ein aus Kunststoff bestehendes Spritzgußteil ist.

## Claims

1. A child's pedal vehicle including a steering wheel (8), which is fastened to a steering rod (7), which is guided through the vehicle body, **characterised in that** constructed below the vehicle body (1) there is a support surface (9) for a rotary plate (6), which is held on the support surface (9) and includes bearings (16) for the front axle of the pedal vehicle, that the rotary plate (6) further includes a circular arcuate opening (19), which extends in the longitudinal direction of the front axle and is spaced from it, and through which the steering rod (7) engages, and a further opening (20), which is formed centrally with respect to the arcuate opening (19) on the side remote from the front axle and into which an arcuate bent back end (26) of the steering rod (7) engages.

2. A child's pedal vehicle as claimed in claim 1, **characterised in that** the steering rod (7) is of substantially U-shape at its lower end.

3. A child's pedal vehicle as claimed in claim 1 or 2, **characterised in that** the further opening (20) is an elongate hole, which extends perpendicular to the front axle.

4. A child's pedal vehicle as claimed in one of claims 1 to 3, **characterised in that** the engagement of the bent over end (26) of the steering rod (7) into the elongate hole (20) is secured by fastening the steering wheel (8) to the upper end of the steering rod (7).

5. A child's pedal vehicle as claimed in one of claims 1 to 4, **characterised in that** engaging beneath the rotary plate (6) there are at least two pegs (11), which are fastened to the vehicle body (1) and which extend through slots (15) in the rotary plate (6), which, in the assembled state of the child's pedal vehicle, are offset from the pegs (11) in the peripheral direction.

6. A child's pedal vehicle as claimed in one of claims 1 to 5, **characterised in that** the rotary plate (6) is an injection moulded component consisting of plastic material.

## Revendications

1. Véhicule d'enfant à pédaler, avec un volant (8) qui est fixé à une barre directrice (7), qui passe à travers le corps du véhicule (1),
**caractérisé en ce**
**qu'**il est réalisé sous le corps de véhicule (1) une face de palier (9) pour un plateau tournant (6) qui est retenu à la face de palier (9) et qui contient des paliers (16) pour l'essieu avant du véhicule à pédaler,
en ce que le plateau tournant (6) présente en outre un évidement en forme d'arc de cercle (19) qui s'étend dans la direction longitudinale de l'essieu avant, à une distance de celui-ci et à travers lequel passe la barre directrice (7), et un autre évidement (20) réalisé au milieu relativement à l'évidement en forme d'arc de cercle (19) au côté éloigné de l'essieu avant, dans lequel s'engage une extrémité (26) ramenée en forme d'arc de la barre directrice (7).

2. Véhicule d'enfant à pédaler selon la revendication 1, **caractérisé en ce que** la barre directrice (7) est réalisée à l'extrémité inférieure sensiblement en forme de U.

3. Véhicule d'enfant à pédaler selon la revendication 1 ou 2, **caractérisé en ce que** l'autre évidement (20) est un trou oblong qui s'étend perpendiculairement à l'essieu avant.

4. Véhicule d'enfant à pédaler selon l'une des revendications 1 à 3, **caractérisé en ce que** l'engagement de l'extrémité recourbée (26) de la barre directrice (7) dans le trou oblong (20) est assuré par la fixation du volant (8) à l'extrémité supérieure de la barre directrice (7).

5. Véhicule d'enfant à pédaler selon l'une des revendications 1 à 4, **caractérisé en ce que** passent sous le plateau tournant (6) au moins deux tenons (11) montés sur le corps de véhicule (1), qui passent à travers des fentes (15) dans le plateau tournant (6) qui, à l'état monté du véhicule d'enfant à pédaler, sont décalées dans la direction périphérique relativement aux tenons (11).

6. Véhicule d'enfant à pédaler selon l'une des revendications 1 à 5,
**caractérisé en ce que** le plateau tournant (6) est une pièce moulée en matériau synthétique.
